# EUROPEAN PATENT APPLICATION

(11) **EP 3 636 684 A1**
(43) Date of publication of application: **15.04.2020**
(21) Application number: 18813305.2
(22) Date of filing: 01.06.2018
(51) Int. Cl.: C08G 18/00, B60R 13/08, C08G 101/00

(54) **COMPOSITION FOR POLYURETHANE FOAM PRODUCTION, POLYURETHANE FOAM, AND SOUND-ABSORBING MEMBER**

(30) Priority: 05.06.2017 JP 2017111197
(71) Applicant: Bridgestone Corporation, Tokyo 104-8340 (JP)
(72) Inventor: KANZAKI, Shinya, Tokyo 104-8340 (JP)
(74) Representative: Oxley, Robin John George
(86) International application number: PCT/JP2018/021211
(87) International publication number: WO 2018/225651

(57) **Abstract**

The purpose of the present invention is to provide: a composition for polyurethane foam production which gives polyurethane foam having a low density and excellent sound-absorbing properties; polyurethane foam obtained from the composition; and a sound-absorbing member. The composition for polyurethane foam production of the present invention is characterized by comprising a polyol, a polyisocyanate, a catalyst, a blowing agent, a foam stabilizer, and an auxiliary blowing agent, the blowing agent being water, the amount of which is 4-11 parts by mass per 100 parts by mass of the polyol, and the auxiliary blowing agent being a liquid halogenated olefin, the amount of which is 10-30 parts by mass per 100 parts by mass of the polyol.

## Description

### Technical Field

The present invention relates to a composition for producing a polyurethane foam, a polyurethane foam, and a sound-absorbing member.

### Background Art

Sound-absorbing materials have been required for and used in various parts such as ceiling materials, floor insulators, and dash insulators for vehicle applications. With respect to low-frequency sounds such as automobile engine noise, tire load noise, and rain sounds, wind noise and human conversation from outside, the sound-absorbing property is required to be a predetermined level or higher, and in addition, also with respect to a high-frequency region, the sound-absorbing property has come to be strongly required from the viewpoint of automobile hybrids.

PTL 1 discloses a sound-absorbing structure including a base material, a plurality of membrane vibration sound-absorbing materials disposed and fixed on a surface of the base material, and a cover member provided to cover the plurality of membrane vibration sound-absorbing materials.

PTL 2 discloses a floor material and an automobile interior/exterior material that are composed of a sound-absorbing fiber body and can effectively reduce noise such as noise of a moving car.

### Citation List

### Patent Literature

PTL 1: JP 2012-3170 A
PTL 2: JP 2013-28335 A

### Summary of Invention

### Technical Problem

As described in PTL 2, a fiber system is mainly positioned as a sound-absorbing material, and the use of a polymer resin such as a urethane foam as the sound-absorbing material is limited.

An object of the present invention is to provide a composition for producing a polyurethane foam, from which a polyurethane foam having a low density and excellent sound-absorbing property can be obtained, a polyurethane foam obtained from the composition, and a sound-absorbing member.

### Solution to Problem

As a result of earnest investigations made by the present inventor, it has been found that the problem can be solved by incorporating, into a composition for producing a polyurethane foam, containing a polyol, a polyisocyanates, a catalyst, a foaming agent, a foam stabilizer, and an auxiliary foaming agent, water as the foaming agent in a specific amount and a liquid halogenated olefin as the auxiliary foaming agent in a specific amount. The present invention has been completed based on the above finding.

That is, the present invention relates to the following <1> to <12>.
<1> A composition for producing a polyurethane foam, containing a polyol, a polyisocyanate, a catalyst, a foaming agent, a foam stabilizer, and an auxiliary foaming agent, wherein water is contained as the foaming agent, a content of the water is from 4 to 11 parts by mass per 100 parts by mass of the polyol, a liquid halogenated olefin is contained as the auxiliary foaming agent, and a content of the liquid halogenated olefin is from 10 to 30 parts by mass per 100 parts by mass of the polyol.
<2> The composition for producing a polyurethane foam according to <1>, wherein the foam stabilizer contains at least one selected from the group consisting of a non-reactive silicone and a reactive silicone.
<3> The composition for producing a polyurethane foam according to <2>, which satisfies at least one of the following (a) and (b):
   (a) the non-reactive silicone is contained as the foam stabilizer, and a content of the non-reactive silicone is from 2.0 to 5.0 parts by mass per 100 parts by mass of the polyol; and
   (b) the reactive silicone is contained as the foaming agent, and a content of the reactive silicone is from 1.0 to 3.0 parts by mass per 100 parts by mass of the polyol.
<4> The composition for producing a polyurethane foam according to any one of <1> to <3>, wherein one kind of foam stabilizer is contained as the foam stabilizer.
<5> The composition for producing a polyurethane foam according to any one of <1> to <4>, wherein the liquid halogenated olefin is represented by the following formula 1.

   C₃H_{g}FₕXᵢ (1)

   In the formula 1, each X independently represents a chlorine atom, a bromine atom or an iodine atom, g represents an integer of 0 to 5, h represents an integer of 1 to 6, and i represents an integer of 0 to 5, provided that g + h + i = 6 is satisfied.
<6> The composition for producing a polyurethane foam according to any one of <1> to <5>, wherein the liquid halogenated olefin is trans-1-chloro-3,3,3-trifluoropropene.
<7> The composition for producing a polyurethane foam according to any one of <1> to <6>, wherein the polyisocyanate contains 70% by mass or more of a tolylene diisocyanate compound.
<8> A polyurethane foam, which is obtained by subjecting the composition for producing a polyurethane foam according to any one of <1> to <7> to reaction and foaming.
<9> The polyurethane foam according to <8>, which is used as a sound-absorbing member.
<10> The polyurethane foam according to <8> or <9>, which has a density of 6 kg/m³ to 20 kg/m³.
<11> The polyurethane foam according to any one of <8> to <10>, which has an air permeability of 0.1 ml/cm²/sec to 40.0 ml/cm²/sec.
<12> A sound-absorbing member including the polyurethane foam according to any one of <8> to <11>.

### Advantageous Effects of Invention

According to the present invention, it is possible to provide a composition for producing a polyurethane foam, from which a polyurethane foam having a low density and excellent sound-absorbing property can be obtained, a polyurethane foam obtained from the composition, and a sound-absorbing member.

### Description of Embodiments

The present invention will be described in detail below.

In the present invention, "A to B" representing the numerical limitation means a numerical range including the end points A and B, and means A or more and B or less (where A < B), or A or less and B or more (where A > B).

The terms "part by mass" and "% by mass" have the same meanings as the terms "part by weight" and "% by weight", respectively.

In the present invention, a combination of preferred embodiments is a more preferred embodiment.

### (Composition for Producing Polyurethane Foam)

A composition for producing a polyurethane foam according to the present invention contains a polyol, a polyisocyanate, a catalyst, a foaming agent, a foam stabilizer, and an auxiliary foaming agent, in which water is contained as the foaming agent and the content of the water is 4 to 11 parts by mass per 100 parts by mass of the polyol, and a liquid halogenated olefin is contained as the auxiliary foaming agent and the content of the liquid halogenated olefin is 10 to 30 parts by mass per 100 parts by mass of the polyol.

A sound-absorbing structure as in PTL 1 has a complicated structure and it is difficult to process the structure into a complicated shape. In addition, a fiber system sound-absorbing member as described in PTL 2 has a low density and excellent sound-absorbing property, but there is a production problem such as scattering of fibers during production, and a problem that fibers are detached after long-term use and inhaled by users.

According to the composition for producing a polyurethane foam of the present invention, it is possible to provide a polyurethane foam having a high sound-absorbing property while having s low density and a light weight, and further, having excellent production suitability, which are free from the above problems.

The mechanism of the expression of the effect is unclear, but a part thereof is speculated as follows. That is, it is estimated that a polyurethane foam having excellent foamability, low density and light weight is obtained by the incorporation of water as the foaming agent with a specific amount. In addition, it is speculated that a high sound-absorbing property is obtained by the incorporation of the liquid halogenated olefin as the auxiliary foaming agent with a specific amount.

### <Polyol>

The composition for producing a polyurethane foam according to the present invention contains a polyol. The polyol is not particularly limited as long as it is a compound having two or more hydroxy groups in one molecule.

Examples of the polyol include a polyether polyol and a polyester polyol. Of these, the polyether polyol is preferable in that the sound-absorbing property can be improved. Further, the polyether polyol is excellent in reactivity with polyisocyanates, and has the advantage of not undergoing hydrolysis, unlike the polyester polyol.

Examples of the polyether polyol include polypropylene glycol, polytetramethylene glycol, a polyether polyol composed of a polymer obtained by addition polymerization of propylene oxide and ethylene oxide with a polyhydric alcohol, and a modified product thereof. Examples of the polyhydric alcohol include glycerin and dipropylene glycol. Specific examples of the polyether polyol include a triol obtained by addition polymerization of glycerin with propylene oxide, followed by addition polymerization of the resultant with ethylene oxide, and a diol obtained by addition polymerization of dipropylene glycol with propylene oxide, followed by addition polymerization of the resultant with ethylene oxide.

The polyether polyol as used herein includes a polyether ester polyol. Such a polyether ester polyol can be obtained by reacting a polyoxyalkylene polyol with a polycarboxylic acid anhydride and a compound having a cyclic ether group. Examples of the polyoxyalkylene polyol include polyethylene glycol, polypropylene glycol, and a propylene oxide adduct of glycerin. Examples of the polycarboxylic acid anhydride include an anhydride of succinic acid, adipic acid, or phthalic acid. Examples of the compound having a cyclic ether group (alkylene oxide) include ethylene oxide and propylene oxide.

Examples of the polyester polyol include a condensed polyester polyol obtained by reacting a polycarboxylic acid such as adipic acid or phthalic acid with a polyol such as ethylene glycol, diethylene glycol, propylene glycol or glycerin, a lactone-based polyester polyol, and a polycarbonate-based polyol. With respect to these polyols, the functional group number in terms of the hydroxy group, and a hydroxyl value can be changed by adjusting the kind of a raw material component, the molecular weight, the degree of condensation, and the like.

Among these, as the polyol, the polyether polyol is preferable, and a polypropylene glycol-based polyether polyol produced by adding a propylene oxide group to a polyhydric alcohol is particularly preferable. The polypropylene glycol-based polyether polyol preferably has a number average molecular weight of 500 or more, more preferably 1,000 or more, and still more preferably 2,000 or more, and preferably 15,000 or less, more preferably 8,000 or less, and still more preferably 4,000 or less.

In the present invention, the number average molecular weight and the weight average molecular weight are measured by a gel permeation chromatography (GPC) method and determined in terms of standard polystyrene conversion.

### <Polyisocyanate>

The composition for producing a polyurethane foam according to the present invention contains a polyisocyanate. The polyisocyanate is not particularly limited as long as it is a compound having two or more isocyanato groups (also referred to as isocyanate groups) in one molecule.

Specific examples of the polyisocyanate include tolylene diisocyanate (TDI), 4,4-diphenylmethane diisocyanate (MDI), 1,5-naphthylene diisocyanate (NDI), triphenylmethane triisocyanate, xylylene diisocyanate (XDI), hexamethylene diisocyanate (HDI), dicyclohexylmethane diisocyanate, isophorone diisocyanate (IPDI), and a modified product thereof such as an adduct, an isocyanurate, and a biuret.

Among these, the polyisocyanate preferably contains a tolylene diisocyanate compound in an amount of 70% by mass or more, more preferably 80% by mass or more, and still more preferably 90% by mass or more per the entire polyisocyanate, and particularly preferably, the total amount of polyisocyanate is occupied by the tolylene diisocyanate compound.

The tolylene diisocyanate compound may be 2,4-tolylene diisocyanate, 2,6-tolylene diisocyanate, or a mixture thereof. In addition, although the tolylene diisocyanate compound may be an isocyanurate of tolylene diisocyanate, or an adduct of tolylene diisocyanate (for example, a trifunctional compound), the tolylene diisocyanate compound is particularly preferably 2,4-tolylene diisocyanate, 2,6-tolylene diisocyanate, or a mixture thereof.

An isocyanate index of the polyisocyanate may be 100 or less or more than 100, but is preferably 80 or more, and is preferably 130 or less, and more preferably 110 or less. When the isocyanate index is 80 or more, the hardness of the obtained foam is appropriate, and the mechanical property such as compressive residual strain is excellent. On the other hand, when the isocyanate index is 130 or less, heat generation during production of the foam is reduced, and coloring of the foam is reduced, which is preferable. Here, the isocyanate index represents an equivalent ratio of the isocyanate group of the polyisocyanate to an active hydrogen group of the polyol or water as the foaming agent in percentage. Therefore, an isocyanate index of more than 100 means that the polyisocyanate is present excessively per the polyol and the like.

### <Catalyst>

The composition for producing a polyurethane foam according to the present invention contains a catalyst. The catalyst is used to promote a urethanization reaction between the polyol and the polyisocyanate, a foaming reaction between water as the foaming agent and the polyisocyanate, and the like, and may be appropriately selected from known compounds.

Specific examples of the catalyst include a tertiary amine such as triethylenediamine, dimethylethanolamine, N,N',N'-trimethylaminoethylpiperazine, an organometallic compound (metal catalyst) such as tin octylate (tin octoate) and dibutyltin dilaurate, an acetate, and an alkali metal alcoholate.

As the catalyst, it is preferable to use a combination of an amine catalyst and a metal catalyst in order to enhance the effect. The content of the amine catalyst is preferably 0.01 part by mass or more, more preferably 0.2 part by mass or more, and preferably 0.7 part by mass or less, more preferably 0.6 part by mass or less per 100 parts by mass of the polyol. When the content of the amine catalyst is within the above range, the urethanization reaction and the foaming reaction can be promoted sufficiently and well balanced.

The content of the metal catalyst is preferably 0.05 part by mass or more, more preferably 0.1 part by mass or more, and preferably 0.5 part by mass or less, more preferably 0.4 part by mass or less per 100 parts by mass of the polyol. When the content of the metal catalyst is within the above range, the urethanization reaction and the foaming reaction are well balanced, foaming can be performed well, and the foam has excellent strain characteristics.

### <Foaming Agent>

The composition for producing a polyurethane foam according to the present invention contains a foaming agent, and contains water as the foaming agent. The foaming agent is used to foam a polyurethane resin and thereby form the polyurethane foam.

The content of water is 4 to 11 parts by mass per 100 parts by mass of the polyol. When the content of water is less than 4 parts by mass per 100 parts by mass of the polyol, foaming by the foaming reaction is insufficient, and the density of the foam increases. On the other hand, when the content of water is more than 11 parts by mass per 100 parts by mass of the polyol, the heat of reaction between the water and the polyisocyanate increases, the temperature during the foaming increases, the control is difficult, and scorch is likely to occur inside the foam.

The content of water is preferably 4.5 parts by mass or more, more preferably 5.0 parts by mass or more, still more preferably 5.5 parts by mass or more, and preferably 10.0 parts by mass or less, more preferably 9.0 parts by mass or less, and still more preferably 8.0 parts by mass or less per 100 parts by mass of the polyol.

The composition for producing a polyurethane foam according to the present invention may contain a foaming agent other than water, but preferably contains only water as the foaming agent. When the foaming agent other than water is contained, the content of the foaming agent other than water is preferably 50% by mass or less, more preferably 30% by mass or less, and still more preferably 10% by mass or less per the content of water, and it is particularly preferable that no foaming agent other than water is contained.

### <Foam Stabilizer>

The composition for producing a polyurethane foam according to the present invention contains a foam stabilizer. The foam stabilizer is used to smoothly advance foaming which is to be performed by the foaming agent. As such a foam stabilizer, those commonly used in the production of a soft polyurethane foam can be used. Specific examples of the foam stabilizer include a silicone compound, an anionic surfactant such as sodium dodecylbenzenesulfonate and sodium lauryl sulfate, polyether siloxane, and a phenolic compound.

The content of the foam stabilizer is preferably 1.0 to 8.0 parts by mass per 100 parts by mass of the polyol. When the content of the foam stabilizer is 1.0 part by mass or more, a foam regulating action at the time of foaming of a foam material is sufficiently exhibited, and a good foam can be obtained. On the other hand, when the content of the foam stabilizer is 8.0 parts by mass or less, the foam regulating action is appropriate, and a cell communication property is maintained in an appropriate range.

In the present invention, the foam stabilizer preferably contains at least one selected from the group consisting of a non-reactive silicone and a reactive silicone. By using the non-reactive silicone and/or reactive silicone, excellent foamability can be obtained. As the foam stabilizer, one kind of foam stabilizer is preferably used.

Here, the reactive silicone is a silicone compound (polysiloxane compound) having at least one reactive group selected from the group consisting of an amino group, an epoxy group, a hydroxy group, a mercapto group, and a carboxy group at a main chain terminal or a side chain.

The reactive silicone is a compound in which a reactive group selected from the group consisting of an amino group, an epoxy group, a hydroxy group, a mercapto group and a carboxy group, or a group having the above reactive group is introduced into a side chain or a main chain terminal of a silicone compound such as dimethyl silicone, methyl phenyl silicone, or methyl hydrogen silicone. Among these, the reactive silicone having a hydroxy group or a carboxy group as the reactive group is preferable, and the reactive silicone having a carboxy group is more preferable.

As the reactive silicone, a commercially available product may be used. Examples thereof include various kinds of reactive silicones produced by companies such as Shin-Etsu Silicone Co., Ltd., Dow Corning Toray Co., Ltd., and Momentive Performance Materials Inc., etc. and specific examples of the reactive silicone having a carboxy group include CF1218 (produced by Dow Corning Toray Co., Ltd.) and X22-3701 (produced by Shin-Etsu Silicone Co., Ltd.). Examples of the reactive silicone having a hydroxy group include SF 8427, BY 16-201 and SF 8428 (produced by Dow Corning Toray Co., Ltd.), and X-22-4039 and X-22-4015 (produced by Shin-Etsu Silicone Co., Ltd.).

The non-reactive silicone is not particularly limited as long as the non-reactive silicone does not have a reactive group, and may be a modified non-reactive silicone such as a polyether-modified silicone, an aralkyl-modified silicone, and a long-chain alkyl-modified silicone. As the non-reactive silicone, a commercially available product may be used, and the non-reactive silicone may be appropriately selected from various kinds of products commercially available from Shin-Etsu Silicone Co., Ltd., Dow Corning Toray Co., Ltd., Momentive Performance Materials Inc., and the like.

The content of the non-reactive silicone is preferably 2.0 parts by mass or more, more preferably 2.5 parts by mass or more, still more preferably 3.0 parts by mass or more, even more preferably 3.5 parts by mass or more, and is preferably 5.0 parts by mass or less, more preferably 4.5 parts by mass or less per 100 parts by mass of the polyol. When the content of the non-reactive silicone is within the above range, the polyurethane foam having an excellent sound-absorbing property can be obtained, which is preferable.

The content of the reactive silicone is preferably 1.0 part by mass or more, more preferably 1.5 parts by mass or more, still more preferably 2.0 parts by mass or more, and is preferably 3.0 parts by mass or less per 100 parts by mass of the polyol. When the content of the reactive silicone is within the above range, the polyurethane foam having an excellent sound-absorbing property can be obtained, which is preferable.

### <Auxiliary Foaming Agent>

The composition for producing a polyurethane foam according to the present invention contains an auxiliary foaming agent. The auxiliary foaming agent is also referred to as a foaming aid, and assists the foaming which is performed by the foaming agent and adjusts the density of the foam. In the present invention, a liquid halogenated olefin is contained as the auxiliary foaming agent.

Here, the "liquid halogenated olefin" means a halogenated olefin that is liquid at 10°C, that is, has a boiling point higher than 10°C. The halogenated olefin is preferably an α-olefin having 2 to 10 carbon atoms, more preferably an α-olefin having 2 to 6 carbon atoms, still more preferably an α-olefin having 3 to 5 carbon atoms, particularly preferably an α-olefin having 3 or 4 carbon atoms, and most preferably propene.

The liquid halogenated olefin is preferably a compound represented by the following formula 1.

C₃H_{g}FₕXᵢ (1)

In the formula 1, each X independently represents a chlorine atom, a bromine atom or an iodine atom, g represents an integer of 0 to 5, h represents an integer of 1 to 6, and i represents an integer of 0 to 5, provided that g + h + i = 6 is satisfied.

In the formula 1, each X independently represents a chlorine atom, a bromine atom or an iodine atom, preferably a chlorine atom or a bromine atom, and more preferably a chlorine atom.

g represents an integer of 0 to 5, preferably 1 to 4, and more preferably 1 to 3. h represents an integer of 1 to 6, preferably 2 to 5, and more preferably 2 to 4. i represents an integer of 0 to 5, preferably 0 to 4, and more preferably 0 to 2.

The compound represented by the formula 1 is not particularly limited, and may be a cis-isomer or a trans-isomer, and may be a mixture. Specifically, examples of the compound include 3-chloropentafluoropropene, 2-chloropentafluoropropene, 1-chloropentafluoropropene, 1,1-dichlorotetrafluoropropene, 1,2-dichlorotetrafluoropropene, 1,3-dichlorotetrafluoropropene, hexafluoropropene, 1-chloro-2,3,3,3-tetrafluoropropene, 1,3- dichloro-2, 3, 3-trifluoropropene, 1,2- dichloro- 3,3,3-trifluoropropene, 1,1,3,3,3-pentafluoropropene, 1,2,3,3,3-pentafluoropropene, 2-chloro-3,3,3-trifluoropropene, 2,3,3,3-tetrafluoropropene, 1,2,3,3-tetrafluoropropene, 1,1,2-trifluoropropene, and halogenated propene having a vinylene group described below.

The compound represented by the formula 1 is preferably a compound having a vinylene group (-CH=CH-). Specifically, the compound is 3,3,3-trifluoropropene, 3-bromo-3,3-difluoropropene, 3-chloro-3,3-difluoropropene, 3-fluoropropene, or the compound described below.

Specifically, preferred is a compound represented by CF₃₋ₘClₘCH=CHY (m is an integer of 0 to 3, and Y represents a fluorine atom or a chlorine atom) in which halogen other than fluorine is chlorine.

The compound represented by the formula 1 is more preferably a fluorinated propene represented by R¹-CH=CH-R² (R¹ represents a trihalomethyl group and R² represents halogen. At least one of a halogen atom of R¹ and R² is a fluorine atom). Specific examples of the fluorinated propene include 3,3,3-trichloro-1-fluoropropene, 1,3,3-trichloro-3-fluoropropene, 3,3-dichloro-1,3-difluoropropene, 1,3-dichloro-3,3-difluoropropene, 3-chloro-1,3,3-trifluoropropene, 3-bromo-1,3,3-trifluoropropene, 1-iodo-3,3,3-trifluoropropene, 1-chloro-3,3,3-trifluoropropene, and 1,3,3,3-tetrafluoropropene. Among the above fluorinated propenes, 1-chloro-3,3,3-trifluoropropene (trans-isomer or cis-isomer) and 1,3,3,3-tetrafluoropropene (trans-isomer or-cis isomer) are preferable, 1-chloro-3,3,3-trifluoropropene (trans-isomer or cis-isomer) is more preferable, and trans-1-chloro-3,3,3-trifluoropropene (boiling point 19°C) is still more preferable.

As the liquid halogenated olefin, a commercially available product may be used, and examples thereof include Solstice LBA (trans-1-chloro-3,3,3-trifluoropropene, produced by Honeywell). Synthesis may be performed according to a known method, for example, a method described in JP 2000-7591 A.

The content of the liquid halogenated olefin is 10 to 30 parts by mass per 100 parts by mass of the polyol. When the content of the liquid halogenated olefin is less than 10 parts by mass per 100 parts by mass of the polyol, the effect of the auxiliary foaming agent is not sufficiently exhibited, an apparent density of the foam is increased, and the obtained polyurethane foam becomes hard. On the other hand, when the content of the liquid halogenated olefin is more than 30 parts by mass per 100 parts by mass of the polyol, the apparent density of the foam becomes too low due to excessive foaming, the strength of a resin skeleton is lowered, and the mechanical strength of the foam is lowered.

The content of the liquid halogenated olefin is preferably 11 parts by mass or more, more preferably 12 parts by mass or more, still more preferably 13 parts by mass or more, and is preferably 25 parts by mass or less, more preferably 20 mass parts or less, and still more preferably 18 mass parts or less, per 100 parts by mass of the polyol.

In the present invention, the liquid halogenated olefin may be used alone, or may be used in combination of two or more thereof, but when two or more thereof are used in combination, it is preferable to make a total amount of the liquid halogenated olefin into the above range.

The composition for producing a polyurethane foam according to the present invention may contain an auxiliary foaming agent other than the liquid halogenated olefin. Examples of the auxiliary foaming agent other than the liquid halogenated olefin include liquefied carbon dioxide gas and an alkyl halide. Examples of the alkyl halide include difluoromethane, pentafluoroethane, 1,1,2,2-tetrafluoroethane, 1,1,1,2-tetrafluoroethane, difluoroethane, 1,1,1,2,3,3,3-heptafluoropropane, 1,1,1,3,3,3-hexafluoropropane, 1,1,1,3,3-pentafluoropropane, and 1,1,1,3,3-pentafluorobutane.

The content of the liquid halogenated olefin in the auxiliary foaming agent is preferably 50% by mass or more, more preferably 70% by mass or more, still more preferably 90% by mass or more, and particularly preferably 95% by mass or more per the entire auxiliary foaming agent, and it is most preferable that only the liquid halogenated olefin is contained as the auxiliary foaming agent.

### <Other Raw Material Components>

In the composition for producing a polyurethane foam, if necessary, a crosslinking agent, a flame retardant, a filler, a stabilizing agent, a colorant, and a plasticizer are blended according to an ordinary method. Examples of the crosslinking agent include polyhydric alcohols such as ethylene glycol, glycerin, trimethylolpropane and pentaerythritol, amines such as ethylenediamine and hexamethylenediamine, and amino alcohols such as diethanolamine and triethanolamine. Examples of the flame retardant include tris-dichloropropyl phosphate, tris-chloroethyl phosphate, dibromoneopentyl alcohol, and tribromoneopentyl alcohol.

### (Production of Polyurethane Foam)

The polyurethane foam is produced by subjecting the components (raw materials) of the composition for producing a polyurethane foam to reaction and foaming according to an ordinary method. When producing the polyurethane foam, either a one-shot method in which the polyol and the polyisocyanate are directly reacted, or a prepolymer method in which the polyol and the polyisocyanate are reacted in advance to obtain a prepolymer having an isocyanate group at a terminal and then the prepolymer is reacted with the polyol are adopted. Either a slab foaming method of subjecting the raw materials at room temperature and atmospheric pressure to reaction and foaming, or a mold foaming method of injecting the raw materials (reaction mixture) of the polyurethane foam into a mold, clamping the mold, and subjecting the mixture in the mold to reaction and foaming may be adopted.

The reactions of the raw materials of the polyurethane foam are complicated, and mainly include a urethanization reaction by addition polymerization of the polyol and the polyisocyanate, a crosslinking reaction of a reaction product of the urethanization reaction and the polyisocyanate, and a foaming reaction to generate a urea bond and carbon dioxide gas by the reaction of the polyisocyanate and water as the foaming agent.

### (Polyurethane Foam)

The polyurethane foam according to the present invention is obtained by subjecting the composition for producing a polyurethane foam of the present invention to reaction and foaming. The polyurethane foam thus obtained is preferably a soft polyurethane foam. Here, the soft polyurethane foam is lightweight, generally has an open-cell structure in which cells (bubbles) communicate with each other, is flexible, and has resilience. Accordingly, the soft polyurethane foam can exhibit characteristics such as sound-absorbing property, cushioning, shock absorption, high elasticity, and low resilience.

The polyurethane foam preferably has a density (apparent density) of 6 kg/m³ to 20 kg/m³ measured according to JIS K 6400-1:2004. When the density is 6 kg/m³ or more, the mechanical strength of the polyurethane foam is excellent. On the other hand, when the density is 20 kg/m³ or less, the polyurethane foam is lightweight and suitable for the vehicle field.

The density of the polyurethane foam is more preferably 8 kg/m³ or more, more preferably 10 kg/m³ or more, and is more preferably 18 kg/m³ or less, and even more preferably 15 kg/m³.

Further, according to JIS K 6400-7:2012, the air permeability measured at a foam thickness of 10 mm is preferably 0.1 ml/cm²/sec or more and 40.0 ml/cm²/sec or less for a fragile polyurethane foam. When the air permeability is in the above range, the sound-absorbing property is excellent and a lightweight polyurethane foam can be obtained, which is preferable.

The air permeability is more preferably 1 ml/cm²/sec or more, still more preferably 5ml/cm²/sec or more, and is more preferably 30 ml/cm²/sec or less, still more preferably 25 ml/cm²/sec or less.

When a sound absorption coefficient is measured by a measuring method of sound absorption in a reverberation room according to JIS A 1409:1998, the polyurethane foam of the present invention preferably has a sound absorption coefficient at 1,000 Hz of 0.2 or more, more preferably 0.25 or more, and still more preferably 0.3 or more.

### (Sound-absorbing Member)

The polyurethane foam of the present invention is preferably used as a sound-absorbing member, and particularly preferably used for ceiling materials, floor insulators, and dash insulators for vehicles.

The polyurethane foam of the present invention is not limited to the sound-absorbing member, and may be used as a heat insulating material, a shoe sole, a carpet lining foam, a filter, and a sealing foam.

### Examples

Next, the present invention will be described in more detail with reference to examples below, but the present invention is not limited to the examples. In the following Examples and Comparative Examples, "part" and "%" mean "parts by mass" and "% by mass", respectively, unless otherwise specified.

The components used in each Example and Comparative Example are as follows.
- Polyol: polyether polyol (PPG-based polyether polyol, "SANNIX Triol GP-3000" (produced by Sanyo Chemical Industries, Ltd.), number average molecular weight: 3,000)
- TDI: tolylene diisocyanate (2,4-tolylene diisocyanate : 2,6-tolylene diisocyanate = 80:20)
- Amine catalyst-1: DABCO CS90 (dipropylene glycol solution of triethylenediamine and tertiary amine, produced by Air Products Japan, K.K.)
- Amine catalyst-2: TEDA L33 (triethylenediamine/dipropylene glycol = 33/67% by mass solution, produced by Tosoh Corporation)
- Crosslinking agent-1: TMP (trimethylolpropane, produced by Toyo Chemicals Co., Ltd.)
- Crosslinking agent-2: DM 82162 (polyether polyol, produced by Dow Chemical Company Japan)
- Organotin catalyst: NIKKA OCTHIX tin (tin octylate, produced by Nihon Kagaku Sangyo Co., Ltd.)
- Foam stabilizer-1: NIAX L-580 (non-reactive silicone, produced by Momentive Performance Materials Japan)
- Foam stabilizer-2: CF1218 (reactive silicone (carboxy-modified organosilicone), produced by Dow Corning Toray Co., Ltd.)
- Foaming agent-3: B8239F (non-reactive silicone, produced by Evonik Industries)
- Auxiliary foaming agent-1: Solstice™ 1233zd (trans-1-chloro-3,3,3-trifluoropropene, produced by Honeywell)
- Auxiliary foaming agent-2: methylene chloride A-3000 (produced by Shin-Etsu Chemical Co., Ltd.)
- Stabilizing agent: SBU0130 (phenothiazine, produced by Covestro)
- Black pigment: POLYTON BLACK UE2030-T (black pigment, produced by DIC Corporation)
- Flame retardant: DAIGUARD-880 (non-halogen condensed phosphate ester, produced by Daihachi Chemical Industry Co., Ltd.)

### (Examples 1 to 4 and Comparative Example 1)

Polyurethane foams were prepared by subjecting the components according to the respective formulatioms shown in Table 1 to mixing, stirring, and foaming.

660 g of the composition for producing a polyurethane foam according to Example or Comparative Example was foamed to obtain a polyurethane foam having a width of 400 mm, a depth of 400 mm, and a height of 300 mm.

The polyurethane foam obtained according to Example was divided into four equal parts in a height direction from below, which were designated as Example 1, Example 2, Example 3 and Example 4, respectively, and the following evaluations were performed. That is, the part designated as Example 1 corresponds to the lowermost polyurethane foam and the part designated as Example 4 corresponds to the uppermost polyurethane foam. For the polyurethane foam of Comparative Example 1, the polyurethane foam prepared in a similar manner was divided into four equal parts in a horizontal direction, and the uppermost polyurethane foam was evaluated.

A method of producing the polyurethane foam is not particularly limited, and a known method such as the one-shot method or the prepolymer method can be used. In the present invention, the one-shot method is more suitable for foaming. In the above Examples and Comparative Example, the one-shot method was used for preparation.

Specifically, a polyol component was weighed into a 2 L volume of plastic container, and further, a foaming agent, a foam stabilizer, a crosslinking agent catalyst, and the additive were weighed and added thereto, and the mixture was stirred for 1 minute using an agitator. Thereafter, immediately after TDI was weighed and added, the mixture was mixed again for 5 seconds using the agitator, and the mixed solution was put into a box on which a vinyl sheet was laid.

Accordingly, foaming advances and the polyurethane foam of the above size can be obtained.

### (Examples 5 to 10 and Comparative Examples 2 to 5)

The raw materials for each polyurethane foam shown in the following tables were mixed and foamed by the one-shot method to obtain the respective polyurethane foams. The results of evaluating the obtained polyurethane foams according to the following are also shown in the following tables.

The following evaluation was performed about the obtained polyurethane foam. The results are shown in Tables 2 and 3 below.

### (Density (apparent density))

It was measured according to JIS K 6400-1:2004.

### (Air permeability)

It was measured at a foam thickness of 10 mm according to Frazier type in accordance with JIS K 6400-7:2012.

### (Number of cells)

It was measured according to JIS K 6400-1:2004.

### (Sound absorption coefficient)

It was measured by a measuring method for normal incident sound absorption coefficient according to JIS A 1405-2:2007.

**Table 1**

| | | Example | Comparative Example |
|---|---|---|---|
| | | 1 to 4 | 1 |
| Composition | Polyol | 100.0 | 100.0 |
| | TDI | 75.9 | 70.0 |
| | Water | 6.2 | 5.7 |
| | Amine catalyst-1 | 0.1 | 0.1 |
| | Amine catalyst-2 | 0.2 | 0.2 |
| | Crosslinking agent-1 | 2.1 | 0.0 |
| | Organotin catalyst | 0.3 | 0.3 |
| | Foam stabilizer-1 | 4.0 | 2.2 |
| | Foam stabilizer-2 | 2.5 | 0.0 |
| | Auxiliary foaming agent-1 | 15.0 | - |
| | Auxiliary foaming agent-2 | - | 12.5 |

**Table 2**

| | | Example | | | | Comparative Example |
|---|---|---|---|---|---|---|
| | | 1 | 2 | 3 | 4 | 1 |
| Evaluation | Density (kg/m³) | 13.0 | 13.0 | 13.0 | 13.0 | 14.0 |
| | Air permeability (ml/cm²/sec) | 1.0 | 10.0 | 15.0 | 30.0 | 150.0 |
| | Number of cells (/25 mm) | 40 | 40 | 40 | 40 | 40 |
| | Sound absorption coefficient at 500 Hz | 0.08 | 0.08 | 0.09 | 0.10 | 0.10 |
| | Sound absorption coefficient at 1,000 Hz | 0.35 | 0.35 | 0.38 | 0.33 | 0.10 |
| | Sound absorption coefficient at 2,000 Hz | 1.16 | 1.08 | 1.17 | 0.84 | 0.16 |
| | Sound absorption coefficient at 3,150 Hz | 1.62 | 1.56 | 1.64 | 1.28 | 0.28 |
| | Sound absorption coefficient at 4,000 Hz | 1.81 | 1.75 | 1.88 | 1.51 | 0.42 |
| | Sound absorption coefficient at 5,000 Hz | 2.17 | 2.13 | 2.25 | 1.92 | 0.40 |
| | Sound absorption coefficient at 8,000 Hz | 3.35 | 3.34 | 3.49 | 3.24 | 0.39 |
| | Sound absorption coefficient at 10,000 Hz | 4.04 | 4.12 | 4.28 | 4.01 | 0.52 |

**Table 3**

| | | Example | | | | | | Comparative Example | | | |
|---|---|---|---|---|---|---|---|---|---|---|---|
| | | 5 | 6 | 7 | 8 | 9 | 10 | 2 | 3 | 4 | 5 |
| Composition | Polyol | 100 | 100 | 100 | 100 | 100 | 100 | 100 | 100 | 100 | 100 |
| | TDI | 87.4 | 87.4 | 52.1 | 115.7 | 87.4 | 87.4 | 87.4 | 87.4 | 41.4 | 137.6 |
| | Water | 7.3 | 7.3 | 4.0 | 10.0 | 7.3 | 7.3 | 7.3 | 7.3 | 3.0 | 12.0 |
| | Amine catalyst-2 | 0.585 | 0.585 | 0.321 | 0.801 | 0.585 | 0.585 | 0.585 | 0.585 | 0.240 | 0.585 |
| | Crosslinking agent-2 | 0.600 | 0.600 | 0.329 | 0.822 | 0.600 | 0.600 | 0.600 | 0.600 | 0.247 | 0.600 |
| | Organotin catalyst | 0.180 | 0.350 | 0.400 | 0.247 | 0.350 | 0.350 | 0.180 | 0.300 | 0.425 | 0.200 |
| | Foam stabilizer-3 | 4.00 | 4.00 | 4.00 | 4.00 | 3.00 | 5.00 | 4.00 | 4.00 | 4.00 | 4.00 |
| | Auxiliary foaming agent-1 | 10.0 | 30.0 | 15.0 | 30.0 | 30.0 | 30.0 | 8.0 | 35.0 | 22.5 | 15.0 |
| | Stabilizing agent | 1.0 | 1.0 | 1.0 | 1.0 | 1.0 | 1.0 | 1.0 | 1.0 | 1.0 | 1.0 |
| | Black pigment | 4.0 | 4.0 | 4.0 | 4.0 | 4.0 | 4.0 | 4.0 | 4.0 | 4.0 | 4.0 |
| | Flame retardant | 24.0 | 24.0 | 24.0 | 24.0 | 24.0 | 24.0 | 24.0 | 24.0 | 24.0 | 24.0 |
| Evaluation | Density (kg/m³) | 15.6 | 11.7 | 17.9 | 11.5 | 11.5 | 11.8 | 16.2 | 11.9 | 20.8 | No foaming |
| | Air permeability (ml/cm²/sec) | 3.4 | 4.2 | 3.5 | 4.5 | 5.9 | 2.6 | 1.5 | 57.4 | 32.3 | |
| | Sound absorption coefficient at 500 Hz | 0.32 | 0.35 | 0.32 | 0.33 | 0.33 | 0.33 | 0.27 | 0.15 | 0.22 | |
| | Sound absorption coefficient at 1,000 Hz | 0.75 | 0.55 | 0.53 | 0.50 | 0.52 | 0.51 | 0.60 | 0.19 | 0.52 | |
| | Sound absorption coefficient at 2,000 Hz | 0.88 | 0.94 | 1.00 | 0.93 | 0.89 | 0.89 | 0.95 | 0.60 | 0.97 | |
| | Sound absorption coefficient at 3,000 Hz | 0.74 | 0.86 | 0.85 | 0.80 | 0.78 | 0.78 | 0.95 | 0.91 | 0.83 | |
| | Sound absorption coefficient at 4,000 Hz | 0.72 | 0.80 | 0.80 | 0.72 | 0.76 | 0.76 | 0.87 | 0.94 | 0.79 | |
| | Sound absorption coefficient at 5,000 Hz | 0.65 | 0.88 | 0.90 | 0.81 | 0.79 | 0.79 | 0.89 | 0.96 | 0.92 | |

As is clear from Tables 1 to 3, the polyurethane foams of Examples 1 to 10 had a low density and an excellent sound-absorbing property for a wide frequency range. On the other hand, the polyurethane foams of Comparative Examples 1 and 3 were inferior in sound-absorbing property. In addition, the polyurethane foams of Comparative Examples 2 and 4 had a high density. Further, with respect to Comparative Example 5 where water as the foaming agent was incorporated in an amount of 11 parts by mass per 100 parts by mass of the polyol, the foaming could not be sufficiently controlled, so that a foam was not obtained.

### Industrial Applicability

Since the polyurethane foam obtained by the composition for producing s polyurethane foam according to the present invention has a low density and an excellent sound-absorbing property for a wide frequency range, the polyurethane foam is preferably used for ceiling materials, floor insulators, and dash insulators for vehicles.

## Claims

1. A composition for producing a polyurethane foam, comprising a polyol, a polyisocyanate, a catalyst, a foaming agent, a foam stabilizer, and an auxiliary foaming agent, wherein
water is contained as the foaming agent,
a content of the water is from 4 to 11 parts by mass per 100 parts by mass of the polyol,
a liquid halogenated olefin is contained as the auxiliary foaming agent, and a content of the liquid halogenated olefin is from 10 to 30 parts by mass per 100 parts by mass of the polyol.

2. The composition for producing a polyurethane foam according to claim 1, wherein the foam stabilizer contains at least one selected from the group consisting of a non-reactive silicone and a reactive silicone.

3. The composition for producing a polyurethane foam according to claim 2, which satisfies at least one of the following (a) and (b):
(a) the non-reactive silicone is contained as the foam stabilizer, and a content of the non-reactive silicone is from 2.0 to 5.0 parts by mass per 100 parts by mass of the polyol; and
(b) the reactive silicone is contained as the foaming agent, and a content of the reactive silicone is from 1.0 to 3.0 parts by mass per 100 parts by mass of the polyol.

4. The composition for producing a polyurethane foam according to any one of claims 1 to 3, wherein one kind of foam stabilizer is contained as the foam stabilizer.

5. The composition for producing a polyurethane foam according to any one of claims 1 to 4, wherein the liquid halogenated olefin is represented by the following formula 1:
C₃H_{g}FₕXᵢ (1)
wherein each X independently represents a chlorine atom, a bromine atom or an iodine atom, g represents an integer of 0 to 5, h represents an integer of 1 to 6, and i represents an integer of 0 to 5, provided that g + h + i = 6 is satisfied.

6. The composition for producing a polyurethane foam according to any one of claims 1 to 5, wherein the liquid halogenated olefin is trans-1-chloro-3,3,3-trifluoropropene.

7. The composition for producing a polyurethane foam according to any one of claims 1 to 6, wherein the polyisocyanate contains 70% by mass or more of a tolylene diisocyanate compound.

8. A polyurethane foam, which is obtained by subjecting the composition for producing a polyurethane foam according to any one of claims 1 to 7 to reaction and foaming.

9. The polyurethane foam according to claim 8, which is used as a sound-absorbing member.

10. The polyurethane foam according to claim 8 or 9, which has a density of 6 kg/m³ to 20 kg/m³.

11. The polyurethane foam according to any one of claims 8 to 10, which has an air permeability of 0.1 ml/cm²/sec to 40.0 ml/cm²/sec.

12. A sound-absorbing member comprising the polyurethane foam according to any one of claims 8 to 11.
